# EUROPEAN PATENT APPLICATION

(11) **EP 3 438 634 A1**
(43) Date of publication of application: **06.02.2019**
(21) Application number: 17184646.2
(22) Date of filing: 03.08.2017
(51) Int. Cl.: G01M 5/00, F01D 5/16, G01M 7/02, G01H 1/00

(54) **METHOD OF MANUFACTURING AND APPARATUS**

(71) Applicant: Siemens Aktiengesellschaft, 80333 München (DE)
(72) Inventor: Osborne, Mark, Harmston, Lincoln, LN5 9SL (GB); Pan, Wenke, Welton, Lincoln, LN2 3UB (GB)
(74) Representative: Maier, Daniel Oliver

(57) **Abstract**

A method of manufacturing a test piece (300) for testing a rotor blade design (200) for a turbomachine, the test piece comprising: a plurality of integrally-formed body portions. There is provided a main body portion (302) corresponding to the rotor blade design, and a frequency-reduction body portion (340, 350, 360, 370) provided on the main body portion (302). The body portions are integrally formed with one another by an additive manufacturing process.

## Description

The present disclosure relates to a manufacturing method.

In particular the disclosure is concerned with a method of manufacturing a test piece for testing a rotor blade design for a turbomachine, and a test piece for testing a rotor blade design.

### Background

Gas turbines generally include a rotor with a number of rows of rotating rotor blades which are fixed to a rotor shaft and rows of stationary vanes between the rows of rotor blades which are fixed to a casing of the gas turbine. When a hot and pressurized working fluid flows through the rows of vanes and blades it transfers momentum to the rotor blades and thus imparts a rotary motion to the rotor while expanding and cooling. The vanes are used to control the flow of the working medium so as to optimize momentum transfer to the rotor blades.

A typical gas turbine rotor blade comprises a root portion by which it is fixed to the rotor shaft, and an aerodynamically formed aerofoil portion which allows a transfer of momentum when the hot and pressurized working fluid flows along the aerofoil section.

As part of the manufacturing process of rotor blades, a new rotor blade design undergoes rigorous analysis and, for example numerical modelling as well as empirical testing. More particularly, testing may include assessing high-cycle fatigue of the rotor blade design for which a development rotor blade, or 'test piece', is subjected to high-frequency oscillations using a "shaker table".

Performance of a conventional shaker table may be limited to a maximum frequency which is too low for exciting a particular mode of vibration. Conventionally this technical problem is addressed by providing extra mass to a region of a rotor blade, which reduces the frequency at which modes of vibration occur. Hence a rotor blade is made corresponding to a "production standard" design, for example by a casting process, and an additional, and separately formed, mass element is joined to the rotor blade which provides additional mass.

Conventionally, the mass element is either welded or bolted to the rotor blade.

Welding is a process whereby an additional piece is joined to the development rotor blade at a welding interface. However, the welding interface tends to be comparatively weak and, therefore, may need to be relatively large to allow for sufficiently strong bonding. This may limit the possible locations where the additional piece can be added to those locations where a sufficiently large interface region may be formed. Also, a weak interface may severely limit the mass of the additional piece that may be added, thereby reducing the effectiveness of the testing. Even where a suitable welding interface may be formed and the mass of the additional piece is suitably restricted, material failure remains likely to occur at the interface, which may not become apparent before termination of testing, which consequently invalidates the test.

An alternative to welding the additional piece to the rotor blade is to use a mechanical fixing (e.g. a bolt) to fix the additional piece to the rotor blade. A suitable arrangement of drill holes through the rotor blade may be used to fix/anchor the additional piece to the rotor blade relatively securely, so that it is unlikely to break away during testing. The location, size and number of the drill holes may alter the vibration response of the rotor blade, which consequently invalidates the test.

Thus a method of manufacturing to produce a test piece for testing a rotor blade design which overcomes the shortcomings of conventional test piece preparation and structure, is highly desirable.

### Summary

According to the present disclosure there is provided a method and an apparatus as set forth in the appended claims. Other features of the invention will be apparent from the dependent claims, and the description which follows.

Accordingly there may be provided a method of manufacturing a test piece (300) for testing a rotor blade design (200) for a turbomachine. The test piece may comprises: a plurality of integrally-formed body portions, comprising: a main body portion (302) corresponding to the rotor blade design, and frequency-reduction body portion (340, 350, 360, 370) provided on the main body portion (302); wherein the body portions are integrally formed with one another by an additive manufacturing process.

The main body portion (302) may comprise : an aerofoil portion (320) having a tip region (335); the method comprising the step of forming the frequency-reduction body portion (340) integrally with the tip region (335).

The method may further comprise the steps of: determining a mode of vibration of the rotor blade design (200); identifying a mode shape of the mode of vibration; and in dependence on the mode shape, determining a region of the main body portion (302) on which to provide the frequency-reduction body portion (340, 350, 360, 370).

The method may further comprise the step of: in dependence on the mode shape, determining an additional region of the main body portion on which to provide an additional frequency-reduction body portion.

The frequency-reduction body portions (340, 350, 360, 370) may be spaced apart from one another on the main body portion (302).

The method may further comprise the step of identifying a modal frequency of the mode of vibration; and determining a mass of the frequency-reduction body portion(s) dependent on the modal frequency.

The method may further comprise the steps of: forming the first frequency-reduction body portion (340, 350, 360, 370) to have a first mass, and forming the second frequency-reduction body portion (340, 350, 360, 370) to have a second mass, wherein the first mass and the second mass are different.

There may also be provided a test piece (300) for testing a rotor blade design (200) for a turbomachine, the test piece comprising a plurality of integrally-formed body portions comprising : a main body portion (302) which corresponds to the rotor blade design (200); and a frequency-reduction body portion (340, 350, 360, 370) provided on the main body portion (302); wherein the body portions are integrally formed with one another by an additive manufacturing process.

The test piece may further comprise an additional frequency-reduction body portion (340, 350, 360, 370) integrally-formed with the main body portion (302), wherein the frequency-reduction body portions (340, 350, 360, 370) are spaced apart from one another on the main body portion (302).

The main body portion (302) of the rotor blade design (200) may comprise an aerofoil portion (330) having a tip region (335) which extends from a leading edge (332) of the aerofoil portion (330) to a trailing edge of the aerofoil; and the frequency-reduction body portion (340) is integrally formed with the tip region (335).

The aerofoil portion (330) may comprise : a suction surface (336) and a pressure surface (338); and a frequency-reduction body portion (350, 360) is integrally formed on a region (351, 361) of the suction surface (336). Additionally, or alternatively, a frequency-reduction body portion (370) may be integrally formed on a region of the pressure surface (338).

The test piece (300) may further comprise a platform (320), and the aerofoil portion (330) extends from the platform (320) to the aerofoil tip region (335), wherein the frequency-reduction body portion (350, 360, 370) is provided between the aerofoil tip (335) and platform (320).

The frequency-reduction body portion (350, 360, 370) may be spaced apart from the platform (320) and spaced apart from the tip region (335).

The frequency-reduction body portion (350, 360, 370) may extend at least part of the way between the leading edge (332) and the trailing edge (334).

The frequency-reduction body portion (350, 360) may extend outwards from the region (351, 361) of the suction surface (336). Additionally, or alternatively, the frequency-reduction body portion (370) may extend outwards from the region of the pressure surface (338).

There may also be provided a computer-readable storage medium, the storage medium recording instructions for an additive manufacturing process for forming a test piece (300) according to the present disclosure.

Hence there is provided a cost-effective manufacturing process of a test piece with a structure which has improved structural integrity because the test piece is formed in one piece rather than as an assembly of pieces. Additionally the method and test piece of the present disclosure will produce more accurate test results, thereby aiding the development of the rotor blade design.

### Brief Description of the Drawings

Examples of the present disclosure will now be described with reference to the accompanying drawings, in which:
Figure 1 shows a schematic representation of an example of a turbomachine;
Figure 2 shows an enlarged region of a section of a turbine of the turbomachine shown in Figure 1;
Figure 3 shows a schematic representation of a rotor blade design;
Figure 4 shows a schematic representation of a test piece according to the present disclosure;
Figure 5 shows schematic representation of a first flexural mode of the test piece of Figure 4;
Figure 6 shows a schematic representation of a first edgewise mode of the test piece of Figure 4;
Figure 7 shows a schematic representation of a first torsional mode of the test piece of Figure 4;
Figure 8 shows a schematic representation of a test piece according to the present disclosure; and
Figure 9 shows a cross-sectional view of the test piece of Figure 8.

### Detailed Description

The present disclosure relates to the design, testing, manufacture and structure of rotor blades for a turbomachine.

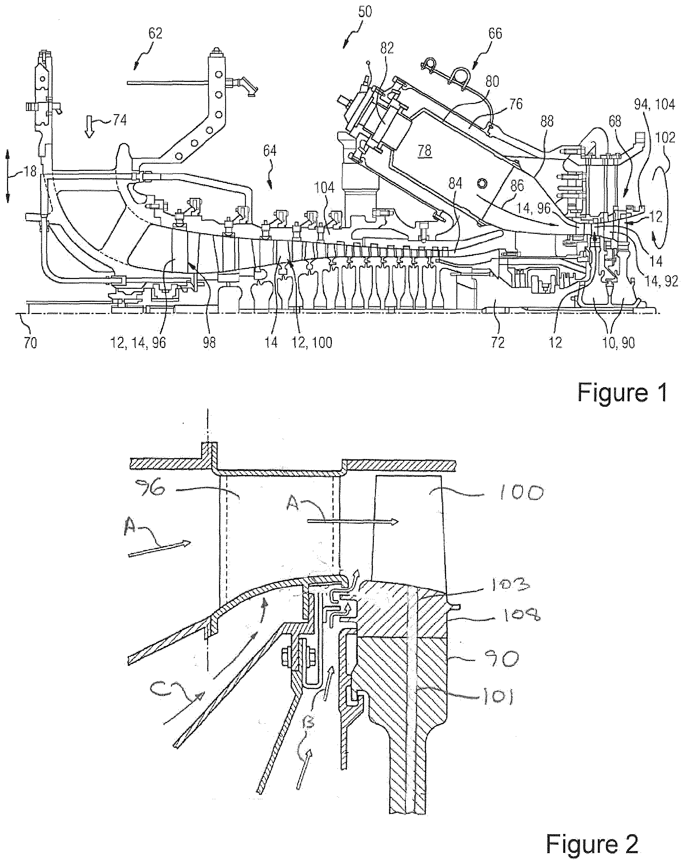

By way of context, Figure 1 shows an example of a gas turbine engine 60 in a sectional view, which illustrates the nature of rotor blades and the environment in which they operate. The gas turbine engine 60 comprises, in flow series, an inlet 62, a compressor section 64, a combustion section 66 and a turbine section 68, which are generally arranged in flow series and generally in the direction of a longitudinal or rotational axis 70. The gas turbine engine 60 further comprises a shaft 72 which is rotatable about the rotational axis 70 and which extends longitudinally through the gas turbine engine 60. The rotational axis 70 is normally the rotational axis of an associated gas turbine engine. Hence any reference to "axial", "radial" and "circumferential" directions are with respect to the rotational axis 70.

The shaft 72 drivingly connects the turbine section 68 to the compressor section 64. In operation of the gas turbine engine 60, air 74, which is taken in through the air inlet 62 is compressed by the compressor section 64 and delivered to the combustion section or burner section 66. The burner section 66 comprises a burner plenum 76, one or more combustion chambers 78 defined by a double wall can 80 and at least one burner 82 fixed to each combustion chamber 78. The combustion chambers 78 and the burners 82 are located inside the burner plenum 76. The compressed air passing through the compressor section 64 enters a diffuser 84 and is discharged from the diffuser 84 into the burner plenum 76 from where a portion of the air enters the burner 82 and is mixed with a gaseous or liquid fuel. The air/fuel mixture is then burned and the combustion gas 86 or working gas from the combustion is channelled via a transition duct 88 to the turbine section 68.

The turbine section 68 may comprise a number of blade carrying discs 90 or turbine wheels attached to the shaft 72. In the example shown, the turbine section 68 comprises two discs 90 which each carry an annular array of turbine assemblies 12, which each comprises an aerofoil 14 embodied as a turbine blade 100. Turbine cascades 92 are disposed between the turbine blades 100. Each turbine cascade 92 carries an annular array of turbine assemblies 12, which each comprises an aerofoil 14 in the form of guiding vanes (i.e. stator vanes 96), which are fixed to a stator 94 of the gas turbine engine 60.

Figure 2 shows an enlarged view of a stator vane 96 and rotor blade 100. Arrows "A" indicate the direction of flow of combustion gas 86 past the aerofoils 96,100. Arrows "B" show air flow passages provided for sealing, and arrows "C" indicate cooling air flow paths for passing through the stator vanes 96. Cooling flow passages 101 may be provided in the rotor disc 90 which extend radially outwards to feed the rotor blade 100.

The combustion gas 86 from the combustion chamber 78 enters the turbine section 58 and drives the turbine blades 100 which in turn rotate the shaft 72 to drive the compressor. The guiding vanes 96 serve to optimise the angle of the combustion or working gas 86 on to the turbine blades.

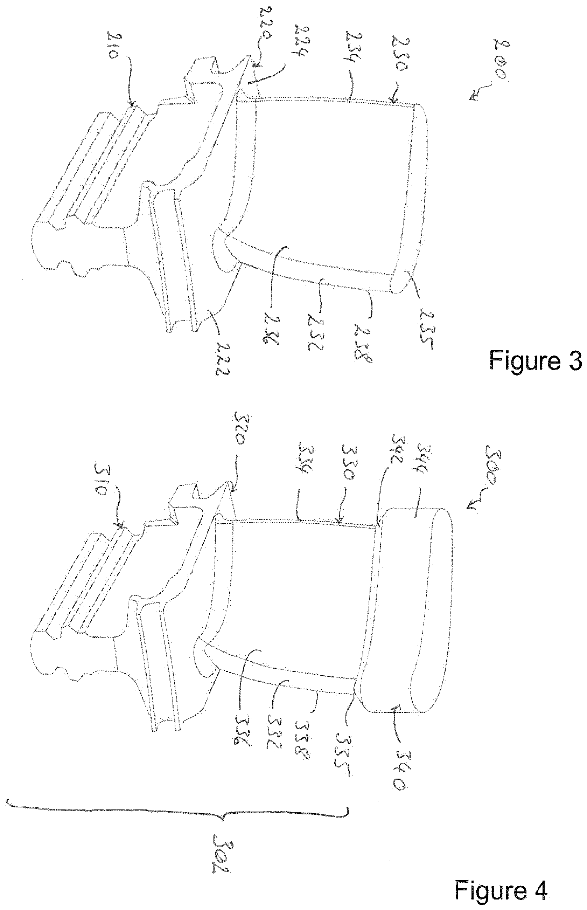

Figures 3, 4 show a rotor blade design 200 and a test piece 300 according to the present disclosure, respectively.

The rotor blade design 200 corresponds to a rotor blade, such as turbine blade 100. The rotor blade design may be an actual rotor blade made according to the design, or may alternatively be recorded in a technical drawing or a computer-readable file or any other suitable means.

The rotor blade design 200 includes a root portion 210, a platform 220 and an aerofoil portion 230. The root portion 210 is configured to be fixed to a rotor disc 90, for example as shown in Figure 2.

The platform 220 comprises a leading end 222 and a trailing end 224. With respect to the gas turbine, the leading end and the trailing end delimit the platform along the axial direction.

The aerofoil portion 230 extends from the platform 220. The aerofoil portion 230 has a leading edge 232 and a trailing edge 234. Suitably, the leading edge is located towards the leading end 222 of the platform 210, while the trailing edge is located towards the trailing end of the platform.

The aerofoil portion 230 has a height which is measured along the radial direction, i.e. beginning at the platform 220 and terminating at a tip region 235 of the aerofoil portion 230. The tip region extends between the leading edge 232 and the trailing edge 234.

The aerofoil portion 230 comprises a pressure surface 236 and a suction surface 238. The pressure surface and the suction surface extend between the leading edge 232 and the trailing edge 234.

The test piece 300 is for testing the rotor blade design 200 and particularly for testing high-cycle fatigue. The test piece comprises a main body portion 302 which is shaped to correspond to the rotor blade design 200. That is, the main body portion forms a root portion 310, a platform 320, and an aerofoil portion 330.

The aerofoil portion 330 extends from the platform 320, and comprises a leading edge 332, a trailing edge 334, a tip region 335, a pressure surface 336 and a suction surface 338.

The test piece 300 also includes a first frequency-reduction body portion 340 which is integrally formed with the main body portion 302. The resulting shape of the test piece is therefore based on the rotor blade design 200 but modified to include the first frequency-reduction body portion. The first frequency-reduction body portion is a first additional body portion or feature, i.e. an element in addition to the rotor blade shape 302.

That is, according to the present example the test piece comprises a plurality of integrally-formed body portions, including the main body portion 302 corresponding to the rotor blade design, and a frequency-reduction body portion 340 which is provided on the main body portion. Additionally, the body portions are integrally formed with one another by an additive manufacturing process, explained in greater detail below.

According to the present example, the first frequency-reduction body portion 340 is located at the aerofoil portion 330. More particularly, the first frequency-reduction body portion is joined to the aerofoil portion along the full length of the tip region 335. In other words, an interface region is formed along the tip region by which the main body portion 302 and the first frequency-reduction body portion are joined together. The first frequency-reduction body portion 340 comprises a first portion 342 and a second portion 344. The first portion 342 is a transition region joining the tip region 335 of the aerofoil portion 330 to the second portion 344. The first portion may have a varying (i.e. not constant) cross-section.

The second portion 344 of the first frequency-reduction body portion 340 extends from the first portion 342 in generally the same direction as the aerofoil portion 330, i.e. away from the platform 220. The second portion may have a generally oval cross-section, which corresponds to the profile curvature of the aerofoil portion 330. An outer surface/periphery of the second portion may generally have the same profile as the tip of the aerofoil portion, albeit offset from the surfaces which define the tip.

As part of the manufacturing process, the test piece 300 undergoes testing for assessing the rotor blade design 200. According to the present example, for an assessment of high-cycle fatigue the test piece is subjected to a high-frequency oscillation simulating rotor blade behaviour in a gas turbine. Such testing may be performed using a shaker table.

The shaker table is required to be capable of exciting a mode of vibration for empirically testing blade behaviour in that mode. That is, the shaker table must be able to meet and maintain a mode frequency associated with the mode of vibration. Certain vibration modes, however, may have a mode frequency, or 'modal frequency', which exceeds the maximum frequency of the shaker table. For example, the shaker table may have a maximum frequency of x kHz (Kilohertz). By contrast, a first torsional mode of the rotor blade according to the rotor blade design 200, may have a modal frequency of approximately y kHz, where y has a value greater than x. The shaker table would therefore not be capable of exciting this mode and thus empirical testing would not be not possible using the described setup. In the absence of the method and apparatus of the present disclosure, it would therefore be necessary to provide different vibration equipment or to modify the rotor blade design so as to lower the modal frequency below x kHz.

As previously explained, the test piece includes not only the main body portion 302, corresponding to the rotor blade design 200, but also a first frequency-reduction body portion 340. The frequency-reduction body portion is configured to alter the inertial response of the main body portion. Thereby a modal frequency of the rotor blade may be reduced to a value below the maximum frequency of the shaker table.

A suitable location, shape and size (or mass or volume) of the first frequency-reduction body portion is determined based on results of numerical modelling of the rotor blade design 200. According to the present example, the numerical modelling includes finite element analysis. Thereby a mode of vibration of the rotor blade is simulated, including the modal shape and modal frequency. Depending on the modal shape, the location for adding a frequency-reduction element to the development rotor blade may be determined, so as not to substantially affect the modal shape.

Depending on the modal frequency, the size of the frequency-reduction element (where "size" may be defined by mass and/or volume), is determined, so as to sufficiently reduce the modal frequency to a value below the maximum frequency of the shaker table. The method of manufacturing the test piece 300 comprises identifying a modal frequency of the mode of vibration, and determining a size of the first frequency reduction-body portion 340 dependent on the modal frequency. Conveniently, additive manufacturing allows adding a precise value of mass to the main body 302 at a precise interface region, whereas conventional methods may not provide for either. Thus the modal frequency of a test piece according to the present disclosure may be altered as required.

As shown in Figure 4, the first frequency-reduction body portion 340 may be formed along the tip region 335 of the aerofoil portion. That is to say, the method of manufacturing of the test piece 300 includes a step of forming the first-frequency reduction body portion integrally with the tip region.

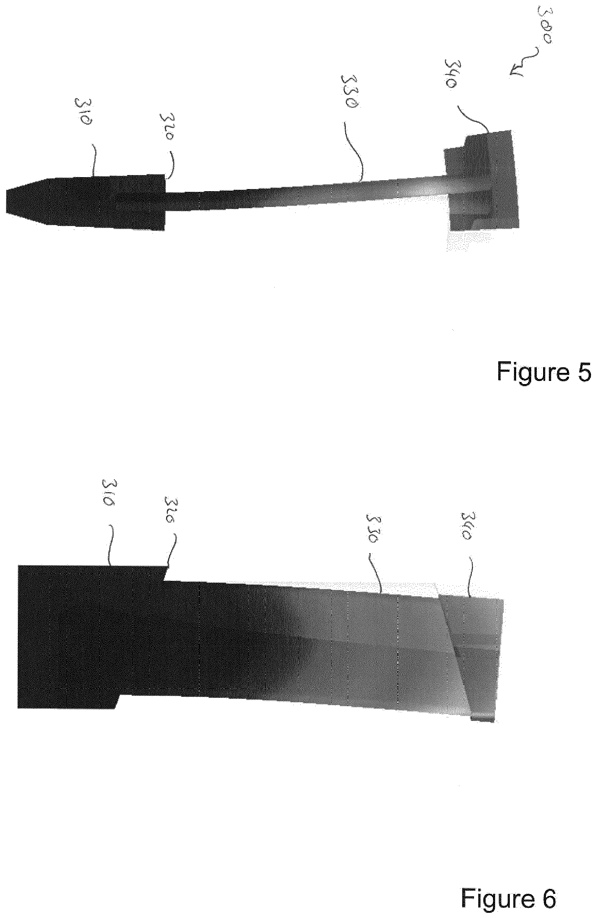

Figure 5 shows a schematic representation illustrating exemplary rotor blade behaviour. In particular, Figure 5 illustrates the first flexural mode of vibration of the test piece 300. Accordingly, the test piece is shown in a deformed state in which the aerofoil portion 330 is bent sideways, or 'flexed', along a direction which, in use, is perpendicular to the flow of working fluid.

The method of manufacturing of the test piece 300 according to the present disclosure includes determining a mode of vibration of the rotor blade design 200, identifying a mode shape of the mode of vibration, and in dependence on the mode shape, determining a region of the main body portion on which to provide the frequency-reduction body portion. In the example shown in Figure 5, the first frequency-reduction body portion 340 is joined to (i.e. integrally formed with) the main body portion 302 along the tip 335, so as not to substantially alter the modal shape of the main body portion. The mass of the first frequency-reduction body portion 340 is chosen to reduce the modal frequency of the main body portion. By this means, the modal frequency may be reduced by a factor in the range of about 2 to 4. In particular, the first flexural mode of the rotor blade design 200 may be reduced by a factor of about 3.

Figure 6 shows a schematic representation of the test piece 300 in the first edgewise mode of vibration. The test piece is shown in a deformed state in which the aerofoil portion is bent along a lengthwise direction, i.e. a direction which in use is parallel to the flow of working fluid past the aerofoil. The first edgewise mode of vibration may be reduced by a factor of about 2.75. Thus the first additional body portion may alter the modal frequency of the main body portion without substantially affecting the shape of the mode.

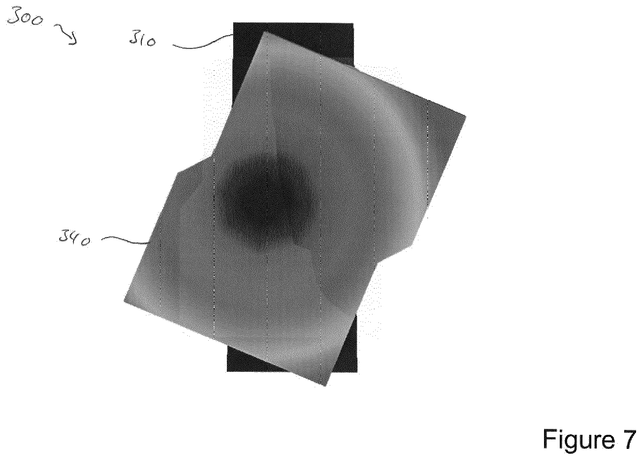

Figure 7 shows a schematic representation of the test piece 300 in the first torsional mode of vibration. Accordingly, the test piece is shown in a deformed state in which the aerofoil portion is twisted about a direction extending away from the platform 320. According to the present example, the first torsional mode of vibration is reduced by a factor of about 2.5. Suitably, the first additional body portion alters the modal frequency of the main body portion without substantially affecting the shape of the mode.

Hence a shaker table with a particular maximum frequency may be used to subject the specially configured test piece 300 to its first flexural, first edgewise or first torsional mode of vibration and, after being excited, high-cycle fatigue may be assessed. In particular, a region of the test piece may be identified as critical location. That is, a location where material failure is expected to occur.

According to the present disclosure, the test piece is formed using an additive manufacturing technique. Additive manufacturing refers to processes used to create a three dimensional object in which layers of material are formed, under computer control, to create an object. Additive manufacturing, for example selective laser melting, provides a quick way to create an object for testing. Hence the test piece may be manufactured by selective laser melting, or a different additive manufacturing technique.

Using additive manufacturing, the resulting test piece has material properties which are constant throughout the test piece. That is, the resulting test piece is formed as a single piece, which is to say the body portions it is comprised of are 'integrally formed'. In other words, the material properties do not vary between portions of the test piece, such as the main body and a frequency-reduction body portion nor, particularly, at the interface between the main body and the frequency-reduction body portion.

Generally conventional manufacturing methods (e.g. casting) are used to produce development rotor blades for frequency analysis as herein described. This is regarded necessary to achieve accurate results as such a test piece will have the same material properties as the intended final design (i.e. production part).

Conversely additive manufacturing produces a component with different material properties, which hitherto resulted in it being considered an inappropriate technique for producing a test piece as the results of any empirical testing may be inherently different to that of a test piece made by a production process (e.g. casting), and thereby considered unsuitable particularly for high-cycle fatigue testing. For example, said differing material properties are believed to affect fatigue strength, due to the grain structure resulting from additive manufacturing, and hence a test piece made by additive manufacturing was considered to be unsuitable for fatigue testing.

Hence although additive manufacturing is a known technique, it has so far not been employed for high-cycle fatigue testing of a rotor blade design. However, analysis and empirical testing of the method and apparatus of the present disclosure has shown a surprising result in that a test piece formed using additive manufacturing provides qualitatively similar results, despite differing material properties.

In the example of Figure 4, the main body portion 302 is integrally formed with a single additional body portion 340. In other examples, there may be provided a plurality of additional body portions, which may be spaced apart from one another on the main body 302.

For example, a second additional body portion and a third additional body portion may be provided to configure the vibration response of the test piece. That is to say, having more than one additional body portion may improve the investigation of vibration modes as additional body portions can be added more selectively than conventionally achievable. This may allow 'fine tuning' of the modal frequency of a given mode of vibration, which may not be possible using known methods of manufacturing and therefore impossible using known methods of testing. Additionally, this may allow the investigation of more complex vibration modes where conventionally it was difficult to add additional mass without substantially affecting the shape of the vibration mode.

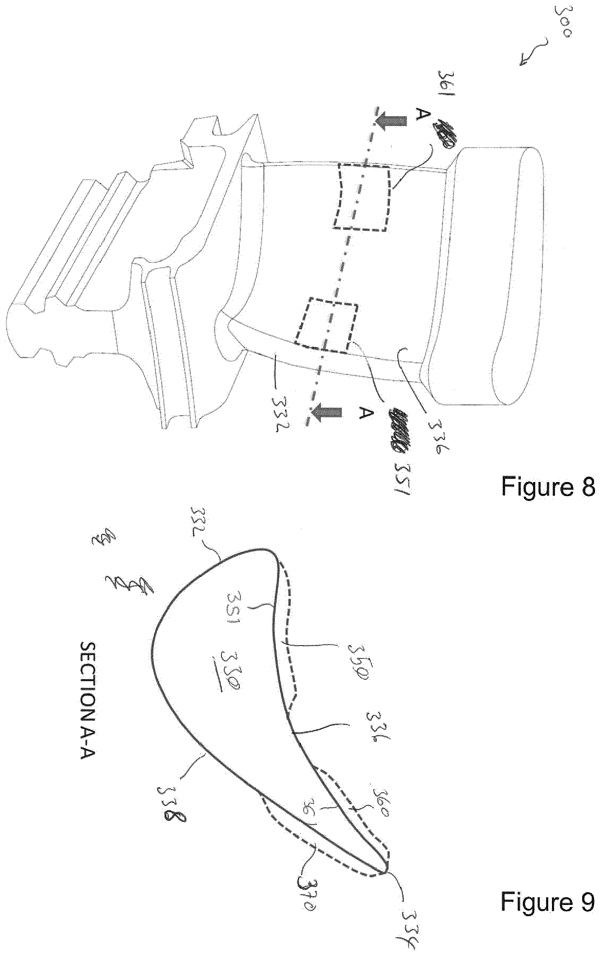

Figures 8, 9 show the test piece 300 comprising, in addition to the first frequency-reduction body portion 340, a second, third and fourth frequency-reduction body portion 350, 360, 370. Figure 8 is a perspective view of the test piece, while Figure 9 is a cross-sectional view of the test piece along line A-A. According to the present example, the additional body portions 350, 360, 370 extend outwards from the aerofoil portion 330.

The second and third frequency-reduction body portions 350, 360 are integrally formed with the pressure surface 332 of the aerofoil portion 330 and extend outwards therefrom. Suitably, frequency-reduction body portions are spaced apart from the platform 320 and the tip region 335. The frequency-reduction body portions may be formed approximately halfway between the platform 320 and the tip region 335. The second and third frequency-reduction body portions 350, 360 extend at least part of the way between the leading edge 332 and the trailing edge 334.

The second frequency-reduction body portion 350 may be joined to (i.e. integrally formed with) the main body portion 302 at a first interface region 361 located on the pressure surface 336, which is located towards the leading edge 336. The third frequency-reduction body portion 360 may be formed in a second interface region 361, which is located towards the trailing edge 338. The first and second interface regions may not necessarily be rectangular, as illustrated, but chosen to have a shape suitable for a particular vibration mode, or modes, or according to their location on the test piece.

The third frequency-reduction body portion 370 may be integrally formed on the suction surface 334 of the aerofoil portion 330 and extend outwards from the suction surface. The third frequency-reduction body portion may be formed towards the trailing edge 338. The third frequency-reduction body portion may be formed approximately halfway between the platform 320 and the tip region 335.

The method of manufacturing of the test piece 300 may comprise determining a vibration mode of the rotor blade design and identifying a mode shape. The method may further comprise, in dependence on the mode shape, determining a region of the main body portion on which to provide the first frequency-reduction body portion, determining a second region on which to provide the second frequency-reduction body portion, determining a third region on which to provide the third frequency-reduction body portion, and determining a fourth region on which to provide the fourth frequency-reduction body portion.

The frequency-reduction body portions 340, 350, 360, 370 may all have different sizes (i.e. mass, volume and/or area). The method of manufacturing of the test piece may comprise forming a first frequency-reduction body portion to have a first mass and a second frequency-reduction body portion to have a second mass, where the first mass is different to the second mass. Known methods for assessing vibration modes, such as finite element analysis, may be employed to determine individual mass values of a plurality of frequency-reduction body portions.

According to other examples, the test piece 300 may not comprise all frequency-reduction body portions 340, 350, 360, 370. Instead, the test piece may comprise only some of the illustrated frequency-reduction body portions or an altogether different configuration of frequency-reduction portions. For example, the test piece may not always comprise the first frequency-reduction body portion.

Although example test pieces are shown comprising one frequency-reduction body portion and four frequency-reduction body portions, the test piece may comprise two, three or more than four frequency-reduction body portions on different locations on the main body portion.

In addition to its general suitability for manufacturing of test pieces, additive manufacturing provides advantages over the conventional processes involving welding or bolting.

Using additive manufacturing, there is no possibility of early material failure at an interface region where an additional body portion is integrally formed with the main body portion. This not only makes it possible to perform vibration testing for a suitable period of time, but also means that a larger mass can be carried at the interface region. Additionally, for a given additional mass, additive manufacturing allows for smaller interface regions than required by convention joining methods.

Using additive manufacturing it is possible to add a plurality of additional body portions to a main body, for example as shown in Figure 8, 9, without substantially affecting the modal shape of the main body, because even a relatively small interface region may suffice to carry a body portion. By contrast, conventionally a single and relatively large additional body portion may need to added due to the limitations of the conventional process (e.g. welding).

Using additive manufacturing the shape of the added mass is flexible, particularly as there is less concern as regards the interface region. For example, a first additional body portion may have a first shape while a third body portion may a second shape different to the first shape, irrespective of the mass of each body portion.

Using additive manufacturing provides for a cost-effective manufacturing process of a test piece. Conveniently, a test piece may be manufactured in about the same time period, regardless of the number of body portions added to the main body portion, and the only added cost relating to the powder required for forming the additional body portions.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A method of manufacturing a test piece (300) for testing a rotor blade design (200) for a turbomachine, the test piece comprising:
a plurality of integrally-formed body portions, comprising:
a main body portion (302) corresponding to the rotor blade design, and
a frequency-reduction body portion (340, 350, 360, 370) provided on the main body portion (302);
wherein the body portions are integrally formed with one another by an additive manufacturing process.

2. The method of manufacturing a claimed in claim 1, wherein:
the main body portion (302) comprises :
an aerofoil portion (320) having
a tip region (335);
the method comprising the step of forming the frequency-reduction body portion (340) integrally with the tip region (335).

3. The method of manufacturing as claimed in any one of the preceding claims comprising:
determining a mode of vibration of the rotor blade design (200);
identifying a mode shape of the mode of vibration; and
in dependence on the mode shape, determining a region of the main body portion (302) on which to provide the frequency-reduction body portion (340, 350, 360, 370).

4. The method of manufacturing as claimed in claim 3 comprising:
in dependence on the mode shape, determining an additional region of the main body portion on which to provide an additional frequency-reduction body portion.

5. The method of manufacturing as claimed in claim 4 wherein:
the frequency-reduction body portions (340, 350, 360, 370) are spaced apart from one another on the main body portion (302).

6. The method of manufacturing according to any one of claims 3 to 5, further comprising:
identifying a modal frequency of the mode of vibration;
determining a mass of the frequency-reduction body portion(s) dependent on the modal frequency.

7. The method of manufacturing as claimed in any one of claims 4 to 6, comprising:
forming the first frequency-reduction body portion (340, 350, 360, 370) to have a first mass, and
forming the second frequency-reduction body portion (340, 350, 360, 370) to have a second mass,
wherein the first mass and the second mass are different.

8. A test piece (300) for testing a rotor blade design (200) for a turbomachine, the test piece comprising a plurality of integrally-formed body portions comprising :
a main body portion (302) which corresponds to the rotor blade design (200); and
a frequency-reduction body portion (340, 350, 360, 370) provided on the main body portion (302);
wherein the body portions are integrally formed with one another by an additive manufacturing process.

9. The test piece according to claim 8, comprising:
an additional frequency-reduction body portion (340, 350, 360, 370) integrally-formed with the main body portion (302), wherein
the frequency-reduction body portions (340, 350, 360, 370) are spaced apart from one another on the main body portion (302).

10. The test piece as claimed in any of claims 8, 9 wherein :
the main body portion (302) of the rotor blade design (200) comprises
an aerofoil portion (330) having
a tip region (335) which extends from a leading edge (332) of the aerofoil portion (330) to a trailing edge of the aerofoil; and
the frequency-reduction body portion (340) is integrally formed with the tip region (335).

11. The test piece as claimed in any of claims 8 to 10 wherein :
the aerofoil portion (330) comprises :
a suction surface (336) and a pressure surface (338); and
a frequency-reduction body portion (350, 360) is integrally formed on a region (351, 361) of the suction surface (336); and/or
a frequency-reduction body portion (370) is integrally formed on a region of the pressure surface (338).

12. The test piece as claimed in claim 11 wherein :
the test piece (300) further comprises a platform (320), and
the aerofoil portion (330) extends from the platform (320) to the aerofoil tip region (335),
wherein the frequency-reduction body portion (350, 360, 370) is provided between the aerofoil tip (335) and platform (320).

13. The test piece as claimed in claim 12 wherein:
the frequency-reduction body portion (350, 360, 370) is spaced apart from the platform (320) and spaced apart from the tip region (335).

14. The test piece as claimed in any one of claims 10 to 13 wherein:
the frequency-reduction body portion (350, 360, 370) extends at least part of the way between the leading edge (332) and the trailing edge (334).

15. The test piece as claimed in any one of claims 11 to 14 wherein:
the frequency-reduction body portion (350, 360) extends outwards from the region (351, 361) of the suction surface (336); and/or
the frequency-reduction body portion (370) extends outwards from the region of the pressure surface (338).

16. A computer-readable storage medium, the storage medium recording instructions for an additive manufacturing process for forming a test piece (300) according to the steps of any one of claims 1 to 7.
